# EUROPEAN PATENT APPLICATION

(11) **EP 3 163 940 A1**
(43) Date of publication of application: **03.05.2017**
(21) Application number: 14896092.5
(22) Date of filing: 26.06.2014
(51) Int. Cl.: H04W 28/08

(54) **METHOD AND APPARATUS FOR PROCESSING UPLINK DATA**

(71) Applicant: Huawei Technologies Co., Ltd., Longgang District Shenzhen, Guangdong 518129 (CN)
(72) Inventor: LU, Wei, Shenzhen Guangdong 518129 (CN); JIN, Weisheng, Shenzhen Guangdong 518129 (CN)
(74) Representative: Gill Jennings & Every LLP
(86) International application number: PCT/CN2014/080883
(87) International publication number: WO 2015/196433

(57) **Abstract**

Embodiments of the present invention provide a method for processing uplink data, and relate to the communications field. The method includes: receiving, by user equipment UE, downlink control signaling that is sent by a network element on a network side and that carries a data flow assortment attribute and a data flow identifier; learning, by the UE, a data flow assortment attribute of an uplink packet according to a data flow identifier of the uplink packet; and determining, by the UE, a sending sequence of the uplink packet according to the data flow assortment attribute of the uplink packet. According to the present invention, when there is no downlink packet in a network, differentiation processing can also be executed on an uplink packet. The present invention further provides a corresponding apparatus.

## Description

### TECHNICAL FIELD

The present invention relates to the communications field, and in particular, to a method and an apparatus for processing uplink data.

### BACKGROUND

Currently, as mobile phones are widely applied, there are more applications occupying high bandwidth, such as a video and an online game. These applications occupy a large quantity of network bandwidth resources. However, because network resources of an access network device are limited, when a large quantity of network resources are used, the access network device may be congested.

When the access network device is congested, to ensure service experience of some users, differentiation processing needs to be performed on an uplink packet. For example, transmission of an uplink packet that has a high timeliness requirement is first ensured.

In related technologies, generally, a network side sends, to user equipment (User Equipment, UE), a downlink packet that carries assortment information. After receiving the downlink packet, the UE provides feedback to the network side, and then the network side controls, according to the foregoing feedback, the UE to perform differentiation processing on the uplink packet. However, when there is no downlink packet in a network, the network side cannot control the UE to perform differentiation processing on the uplink packet, and as a result, a service demand cannot be met.

### SUMMARY

To execute differentiation processing on an uplink packet when there is no downlink packet in a network, the present invention provides a method and an apparatus for processing uplink data. The technical solutions are as follows:

According to a first aspect, a method for processing uplink data is provided, including:
receiving, by UE, downlink control signaling that is sent by a network element on a network side and that carries a data flow assortment attribute and a data flow identifier; learning, by the UE, a data flow assortment attribute of an uplink packet according to a data flow identifier of the uplink packet; and determining, by the UE, a sending sequence of the uplink packet according to the data flow assortment attribute of the uplink packet.

With reference to the first aspect, in a first possible implementation manner, after the learning a data flow assortment attribute of an uplink packet, the method further includes:
classifying, by the UE, an uplink logical channel according to the data flow assortment attribute sent by the network element on the network side; and
mapping, by the UE, the uplink packet to a logical channel corresponding to the data flow assortment attribute of the uplink packet.

With reference to the first possible implementation manner of the first aspect, in a second possible implementation manner, the method further includes:
sending, by the UE, a resource request message to an access network, where the resource request message carries the data flow assortment attribute corresponding to the uplink logical channel; and
receiving, by the UE, a resource that is allocated by the access network to the uplink logical channel according to the data flow assortment attribute corresponding to the uplink logical channel.

With reference to any one of the first aspect to the second possible implementation manner of the first aspect, in a third possible implementation manner, after the determining, by the UE, a sending sequence of the uplink packet according to the data flow assortment attribute of the uplink packet, the method further includes:
tagging, by the UE, the uplink data flow assortment attribute in the uplink packet; and
sending, by the UE to a network element of a core network via the access network, the uplink packet that carries the data flow assortment attribute.

With reference to the first aspect, in a fourth possible implementation manner, the determining a sending sequence of the uplink packet according to the data flow assortment attribute of the uplink packet includes:
determining, by the UE, a sending priority of the uplink packet according to the data flow assortment attribute of the uplink packet, and sending the uplink packet according to the priority.

With reference to the first aspect, in a fifth possible implementation manner, the downlink control signaling is a downlink direct transfer message.

According to a second aspect, a method for processing uplink data is provided, including:
receiving, by an access network, downlink control signaling that is from a packet data network gateway PGW, where the downlink control signaling carries a data flow assortment attribute and a data flow identifier; and sending, by the access network to UE, the downlink control signaling that carries the data flow assortment attribute and the data flow identifier, so that the UE determines a sending sequence of an uplink packet.

With reference to the second aspect, in a first possible implementation manner, after the sending, by the access network to UE, the downlink control signaling that carries the data flow assortment attribute and the data flow identifier, the method further includes:
receiving, by the access network, a resource request message sent by the UE, where the resource request message carries the data flow assortment attribute; and
performing, by the access network, resource allocation according to the data flow assortment attribute.

With reference to the second aspect, in a second possible implementation manner, after the sending, by the access network to UE, the downlink control signaling that carries the assortment attribute, the method further includes:
receiving, by the access network, an uplink packet that is from the UE and that carries the data flow assortment attribute; and
sending, by the access network to a network element of a core network, the uplink packet that carries the data flow assortment attribute.

With reference to the second aspect, in a third possible implementation manner, the downlink control signaling is a downlink direct transfer message.

According to a third aspect, a method for processing uplink data is provided, including:
obtaining, by a packet data network gateway PGW, a data flow assortment attribute and a data flow identifier that are of a data flow; and sending, by the PGW to an access network, downlink control signaling that carries the data flow assortment attribute and the data flow identifier.

With reference to the third aspect, in a first possible implementation manner, after the sending, by the PGW to an access network, downlink control signaling that carries the data flow assortment attribute and the data flow identifier, the method further includes:
receiving, by the PGW, an uplink packet that is sent by UE via the access network and that carries the data flow assortment attribute;
detecting, by the PGW, whether the data flow assortment attribute in the uplink packet is correct; and
if incorrect, skipping transmitting the uplink packet.

With reference to the third aspect or the first possible implementation manner of the third aspect, in a second possible implementation manner, the obtaining, by a PGW, a data flow assortment attribute of a data flow includes:
receiving, by the PGW, user subscription information that is from a policy control and charging rules functional entity PCRF;
detecting, by the PGW, a service type of a packet; and
generating, by the PGW, the data flow assortment attribute according to the received user subscription information and the detected service type of the packet.

With reference to the third aspect, in a third possible implementation manner, the obtaining, by a PGW, a data flow assortment attribute of a data flow includes:
receiving, by the PGW, a data flow assortment attribute of a data flow that is from a PCRF, where the data flow assortment attribute of the data flow is generated by the PCRF; or
receiving, by the PGW, a data flow assortment attribute of a data flow that is from a TDF, where the data flow assortment attribute of the data flow is generated by the TDF.

With reference to the third aspect, in a fourth possible implementation manner, the downlink control signaling is an update bearer request message.

According to a fourth aspect, an apparatus for processing uplink data is provided, including:
a receiving module, configured to receive downlink control signaling that is sent by a network element on a network side and that carries a data flow assortment attribute and a data flow identifier; a learning module, configured to learn a data flow assortment attribute of an uplink packet according to a data flow identifier of the uplink packet; and a processing module, configured to determine a sending sequence of the uplink packet according to the data flow assortment attribute of the uplink packet learned by the learning module.

With reference to the fourth aspect, in a first possible implementation manner, the apparatus further includes:
a channel division module, configured to: after the learning module learns the data flow assortment attribute of the uplink packet, classify an uplink logical channel according to the data flow assortment attribute sent by the network element on the network side; where
the channel division module is further configured to map the uplink packet to a logical channel corresponding to the data flow assortment attribute of the uplink packet.

With reference to the fourth aspect, in a second possible implementation manner, the apparatus further includes:
a sending module, configured to send a resource request message to an access network, where the resource request message carries the data flow assortment attribute corresponding to the uplink logical channel; where
the receiving module is further configured to receive a resource that is allocated by the access network to the uplink logical channel according to the data flow assortment attribute corresponding to the uplink logical channel.

With reference to any one of the fourth aspect to the second possible implementation manner of the fourth aspect, in a third possible implementation manner, the apparatus further includes:
a tagging module, configured to: after the processing module determines the sending sequence of the uplink packet according to the data flow assortment attribute of the uplink packet, tag the uplink data flow assortment attribute in the uplink packet; and
a sending module, configured to send, to a network element of a core network via the access network, the uplink packet that carries the data flow assortment attribute.

With reference to the fourth aspect, in a fourth possible implementation manner, the processing module is specifically configured to:
determine a sending priority of the uplink packet according to the data flow assortment attribute of the uplink packet; and
the sending module is specifically configured to send the uplink packet according to the priority determined by the processing module.

According to a fifth aspect, an apparatus for processing uplink data is provided, including:
a receiving module, configured to receive downlink control signaling that is from a packet data network gateway PGW, where the downlink control signaling carries a data flow assortment attribute and a data flow identifier; and a sending module, configured to send, to UE, the downlink control signaling that carries the data flow assortment attribute and the data flow identifier obtained by the obtaining module, so that the UE determines a sending sequence of an uplink packet.
With reference to the fifth aspect, in a first possible implementation manner, the receiving module is further configured to: after the sending module sends, to the UE, the downlink control signaling that carries the data flow assortment attribute and the data flow identifier, receive a resource request message sent by the UE, where the resource request message carries the data flow assortment attribute; and
the apparatus further includes:
a processing module, configured to perform resource allocation according to the data flow assortment attribute received by the receiving module.

With reference to the fifth aspect, in a second possible implementation manner,
the receiving module is further configured to: after the sending module sends, to the UE, the downlink control signaling that carries the data flow assortment attribute and the data flow identifier, receive an uplink packet that is from the UE and that carries the data flow assortment attribute; and
the sending module is further configured to send, to a network element of a core network, the uplink packet that carries the data flow assortment attribute.

According to a sixth aspect, an apparatus for processing uplink data is provided, including:
an obtaining module, configured to obtain a data flow assortment attribute and a data flow identifier that are of a data flow; and a sending module, configured to send, to an access network, downlink control signaling that carries the data flow assortment attribute and the data flow identifier obtained by the obtaining module.

With reference to the sixth aspect, in a first possible implementation manner, the apparatus further includes:
a receiving module, configured to: after the sending module sends, to the access network, the downlink control signaling that carries the data flow assortment attribute and the data flow identifier, receive an uplink packet that is sent by UE via the access network and that carries the data flow assortment attribute; and
a detection module, configured to detect whether the data flow assortment attribute in the uplink packet received by the receiving module is correct; where
the sending module is further configured to: if the detection module detects that the data flow assortment attribute in the uplink packet is incorrect, skip transmitting the uplink packet.

With reference to the sixth aspect or the first possible implementation manner of the sixth aspect, in a second possible implementation manner, the obtaining module is specifically configured to:
receive user subscription information that is from a policy control and charging rules functional entity PCRF;
detect a service type of a packet; and
generate the data flow assortment attribute according to the received user subscription information and the detected service type of the packet.

With reference to the sixth aspect, in a third possible implementation manner, the obtaining module is specifically configured to:
receive a data flow assortment attribute of a data flow that is from a PCRF, where the data flow assortment attribute of the data flow is generated by the PCRF; or
receive a data flow assortment attribute of a data flow that is from a TDF, where the data flow assortment attribute of the data flow is generated by the TDF.

According to a seventh aspect, user equipment UE is provided, including a receiver and a processor, where
the receiver is configured to receive downlink control signaling that is sent by a network element on a network side and that carries a data flow assortment attribute and a data flow identifier; and the processor is configured to learn a data flow assortment attribute of an uplink packet according to a data flow identifier of the uplink packet received by the receiver, and determine a sending sequence of the uplink packet according to the data flow assortment attribute of the uplink packet.

With reference to the seventh aspect, in a first possible implementation manner, the processor is further configured to: after learning the data flow assortment attribute of the uplink packet, classify an uplink logical channel according to the data flow assortment attribute sent by the network element on the network side; and map the uplink packet to a logical channel corresponding to the data flow assortment attribute of the uplink packet.

With reference to the seventh aspect, in a second possible implementation manner, the UE further includes:
a transmitter, configured to send a resource request message to an access network, where the resource request message carries the data flow assortment attribute corresponding to the uplink logical channel; where
the receiver is further configured to receive a resource that is allocated by the access network to the uplink logical channel according to the data flow assortment attribute corresponding to the uplink logical channel.

With reference to any one of the seventh aspect to the second possible implementation manner of the seventh aspect, in a third possible implementation manner,
the processor is further configured to: after determining the sending sequence of the uplink packet according to the data flow assortment attribute of the uplink packet, tag the uplink data flow assortment attribute in the uplink packet; and
the UE further includes a transmitter, configured to send, to a network element of a core network via the access network, the uplink packet that carries the data flow assortment attribute.

With reference to the seventh aspect, in a fourth possible implementation manner, the processor is specifically configured to:
determine a sending priority of the uplink packet according to the data flow assortment attribute of the uplink packet; and
the UE further includes:
   a transmitter, configured to send the uplink packet according to the sending priority of the uplink packet determined by the processor.

According to an eighth aspect, an access network apparatus is provided, including a receiver and a transmitter, where
the receiver is configured to receive downlink control signaling that is from a packet data network gateway PGW, where the downlink control signaling carries a data flow assortment attribute and a data flow identifier that are of a data flow; and
the transmitter is configured to send, to UE, the downlink control signaling that carries the data flow assortment attribute and the data flow identifier obtained by the receiver, so that the UE determines a sending sequence of sending an uplink packet.

With reference to the eighth aspect, in a first possible implementation manner, the receiver is further configured to: after the transmitter sends, to the UE, the downlink control signaling that carries the data flow assortment attribute and the data flow identifier, receive a resource request message sent by the UE, where the resource request message carries the data flow assortment attribute; and
the apparatus further includes:
a processor, configured to perform resource allocation according to the data flow assortment attribute received by the receiver.

With reference to the eighth aspect, in a second possible implementation manner, the receiver is further configured to: after the transmitter sends, to the UE, the downlink control signaling that carries the data flow assortment attribute and the data flow identifier, receive an uplink packet that is from the UE and that carries the data flow assortment attribute; and
the transmitter is further configured to send, to a network element of a core network, the uplink packet that carries the data flow assortment attribute.

According to a ninth aspect, a packet data network gateway is provided, including a receiver and a transmitter, where
the receiver is configured to obtain a data flow assortment attribute and a data flow identifier that are of a data flow; and
the transmitter is configured to send, to an access network, downlink control signaling that carries the data flow assortment attribute and the data flow identifier obtained by the receiver.

With reference to the ninth aspect, in a first possible implementation manner, the receiver is further configured to: after the transmitter sends, to the access network, the downlink control signaling that carries the data flow assortment attribute and the data flow identifier, receive an uplink packet that is sent by UE via the access network and that carries the data flow assortment attribute; and the apparatus further includes:
a processor, configured to detect whether the data flow assortment attribute in the uplink packet received by the receiver is correct; and
the transmitter is further configured to: if the processor detects that the data flow assortment attribute in the uplink packet is incorrect, skip transmitting the uplink packet.

With reference to the ninth aspect or the first possible implementation manner of the ninth aspect, in a second possible implementation manner,
the receiver is specifically configured to:
receive user subscription information that is from a policy control and charging rules functional entity PCRF;
detect a service type of a packet; and
generate the data flow assortment attribute according to the received user subscription information and the detected service type of the packet.

With reference to the ninth aspect, in a third possible implementation manner,
the receiver is specifically configured to:
receive a data flow assortment attribute of a data flow that is from a PCRF, where the data flow assortment attribute of the data flow is generated by the PCRF; or
receive a data flow assortment attribute of a data flow that is from a TDF, where the data flow assortment attribute of the data flow is generated by the TDF.

After the foregoing technical solutions are used, in the method and the apparatus for processing uplink data provided in the embodiments of the present invention, a network element on a network side transmits, to UE, downlink control signaling that carries a data flow assortment attribute and a data flow identifier. In this way, after receiving the downlink control signaling, the UE can learn a data flow assortment attribute of the uplink packet even if there is no downlink packet, so that the UE can determine a sending sequence of the uplink packet according to the data flow assortment attribute, and perform differentiation processing on the uplink packet without being affected by whether there is a downlink packet.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for processing uplink data according to an embodiment of the present invention;
FIG. 2 is a flowchart of a method for processing uplink data according to another embodiment of the present invention;
FIG. 3 is a flowchart of a method for processing uplink data according to another embodiment of the present invention;
FIG. 4a is a schematic diagram of a method for processing uplink data according to an embodiment of the present invention;
FIG. 4b is a schematic diagram of a manner of obtaining a data flow assortment attribute;
FIG. 4c is a schematic diagram of another manner of obtaining a data flow assortment attribute;
FIG. 4d is a schematic diagram of another manner of obtaining a data flow assortment attribute;
FIG. 5 is a schematic diagram of a method for processing uplink data according to another embodiment of the present invention;
FIG. 6 is a schematic diagram of a method for processing uplink data according to another embodiment of the present invention;
FIG. 7a to FIG. 7d are structural block diagrams of an apparatus for processing uplink data according to an embodiment of the present invention;
FIG. 8a to FIG. 8b are structural block diagrams of another apparatus for processing uplink data according to an embodiment of the present invention;
FIG. 9a to FIG. 9b are structural block diagrams of still another apparatus for processing uplink data according to an embodiment of the present invention;
FIG. 10a to FIG. 10b are structural block diagrams of UE according to an embodiment of the present invention;
FIG. 11a to FIG. 11b are structural block diagrams of an access network apparatus according to an embodiment of the present invention; and
FIG. 12a to FIG. 12b are structural block diagrams of a PGW according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

To better understand the technical solutions in the present invention, the following first briefly describes some network elements and application scenarios involved in the present invention.

The network elements involved in this application include a packet data network gateway (PDN Gateway, PGW), a serving gateway (Serving Gateway, SGW), a policy control and charging rules functional entity (Policy and Charging Rules Function, PCRF), and a mobility management entity (Mobility Management Entity, MME).

PGW: this network element is a gateway of a packet data network (this network may be a packet network inside or outside an operator) that provides a service for a connection; this network element is responsible for forwarding and filtering a user data flow, and the like.

SGW: mainly responsible for relaying a user service flow between UE and the PGW, and used as an anchor point during handover between base stations.

PCRF: a policy control and charging rules functional entity; this functional entity determines a corresponding policy according to a limitation on access of a user to a network, an operator policy, user subscription data, information about an ongoing service of a user, and the like, and provides this policy to a transport gateway for execution, thereby implementing policy and charging control.

MME: a mobility management entity, which mainly completes functions such as UE mobility management, session management, encryption and integrity protection of NAS layer signaling, and PGW/SGW selection in the case of E-UTRAN (Evolved UMTS Territorial Radio Access Network, evolved UMTS territorial radio access network) access. When the UE is in an idle (Idle) state, the MME may save bearer context information.

The method for processing uplink data provided in the embodiments of the present invention mainly involves UE, an access network, and a PGW in a core network. In a data transmission process, a packet may be transmitted from the UE to the core network via the access network, or may be transmitted from the core network to the UE via the access network. The packet that is sent by the UE and that is transmitted to the core network via the access network is referred to as an uplink packet. On the contrary, the packet that is sent by the core network and that is transmitted to the UE via the access network is referred to as a downlink packet. The "access network" in the embodiments of the present invention may be a UTRAN (UMTS Territorial Radio Access Network, UMTS territorial radio access network) system or an E-UTRAN system.

In related technologies, uplink data must be processed according to the downlink packet. However, when there is no downlink packet in a network, the UE cannot execute differentiation processing on the uplink packet. To resolve the foregoing technical problem existing in the related technologies, the embodiments of the present invention are intended to generate, on a core network side, a data flow assortment attribute used to indicate a category of the uplink packet of the UE, and transmit the data flow assortment attribute to the UE by using downlink control signaling. In this way, after receiving the downlink control signaling, the UE can also obtain the data flow assortment attribute even if there is no downlink packet, so that the UE can perform differentiation processing on the uplink packet as usual without being affected by whether there is a downlink packet. The following gives a specific description by using different embodiments.

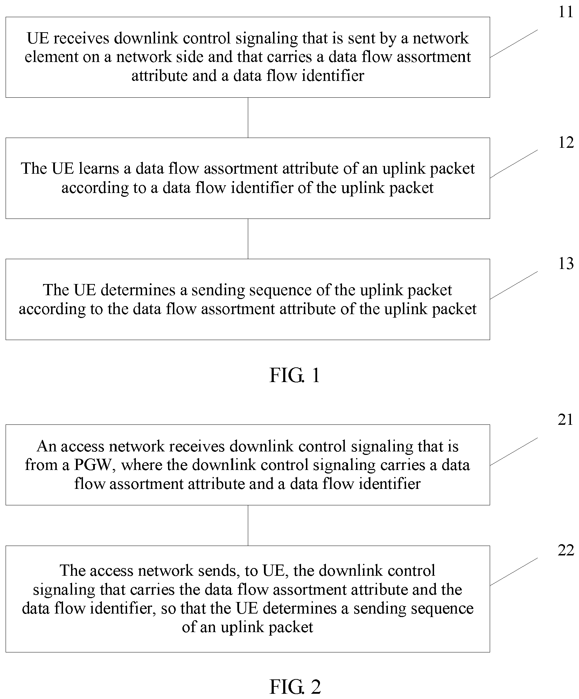

FIG. 1 is a flowchart of a method for processing uplink data according to an embodiment of the present invention. Referring to FIG. 1, the method for processing uplink data provided in this embodiment of the present invention includes the following steps.

11. UE receives downlink control signaling that is sent by a network element on a network side and that carries a data flow assortment attribute and a data flow identifier.

Specifically, a correspondence between the data flow assortment attribute and the data flow identifier may be carried.

The data flow assortment attribute is used to indicate a category of an uplink packet of the UE. This embodiment of the present invention sets no specific limitation on the "downlink control signaling" in this step, and the downlink control signaling may be any downlink control signaling that can carry the data flow assortment attribute. For example, depending on different application scenarios, the downlink control signaling may be downlink control signaling applied to this application scenario, or may certainly be self-defined downlink control signaling. For example, the downlink control signaling may be a downlink direct transfer message. The data flow identifier carried in the downlink control signaling may include but is not limited to five-tuple information, that is, a source IP address, a source port, a destination IP address, a destination port, and a transport layer protocol number. For example, in an actual application, the data flow identifier may also be four tuples.

The "data flow assortment attribute" in this embodiment of the present invention is relative to a data flow, and is used to distinguish different data flow categories. That is, a same data flow assortment attribute identifies data flows of a same category. Therefore, a category of a data flow may be determined by identifying a data flow assortment attribute of the data flow.

This embodiment of the present invention sets no specific limitation on how to specifically classify a data flow category. For example, the data flow category may be classifyd according to a service type of the data flow, such as using a video service as a category and using a QQ service as another category. For another example, the data flow category may be classifyd according to a priority of the data flow, that is, a data flow of a relatively high priority may be classified into a category and a data flow of a relatively low priority is classified into another category. Factors such as a user type (for example, a gold subscriber, a silver subscriber, and a bronze subscriber) and a size of the data flow may be inclassifyually or comprehensively considered to classify a data flow priority. Certainly, the service type and the data flow priority may further be comprehensively considered to classify the data flow category. In conclusion, in this embodiment of the present invention, the data flow category may be classifyd according to the data flow priority, may be classifyd according to the service type, or may be classifyd in another manner, for example, by comprehensively considering the data flow category and the service type.

When an access network device is congested, because network resources of the access network device are limited, a network resource requirement of service data of all types cannot be met. In this embodiment of the present invention, introducing a data flow assortment attribute to distinguish a data flow can ensure that data flows of some categories can be effectively transmitted in a timely manner when the network resources of the access network device are limited, so that the network resources of the access network device can be used more properly to meet a service requirement.

12. The UE learns a data flow assortment attribute of an uplink packet according to a data flow identifier of the uplink packet.

For example, according to the data flow identifier (for example, five tuples) of the uplink packet, the UE queries the data flow assortment attribute and the data flow identifier that are sent by the network element on the network side, and learns the data flow assortment attribute of the uplink packet.

13. The UE determines a sending sequence of the uplink packet according to the data flow assortment attribute of the uplink packet.

The determining a sending sequence of the uplink packet according to the data flow assortment attribute of the uplink packet may include: determining, by the UE, a sending priority of the uplink packet according to the data flow assortment attribute of the uplink packet, and sending the uplink packet according to the priority.

This embodiment of the present invention may be applied to a scenario in which there is an uplink data flow only but no downlink data flow. However, this embodiment of the present invention may also be applied to a general case in which both an uplink data flow and a downlink data flow exist. If this embodiment of the present invention is applied to a case in which no downlink data flow exists but only an uplink data flow exists, it may be first determined whether only the uplink data flow exists. A possible manner is determining whether the five-tuple information of the uplink data flow also exists in a downlink transport stream template (Traffic Flow Template, TFT). If the five-tuple information of the uplink data flow does not exist in the TFT, it may be considered that for the data flow, there is only the uplink data flow and no downlink data flow exists. In this case, the foregoing technical solution in this embodiment of the present invention may be used.

In the method for processing uplink data provided in this embodiment of the present invention, a network element on a network side transmits, to UE, downlink control signaling that carries a data flow assortment attribute and a data flow identifier. In this way, after receiving the downlink control signaling, the UE can learn a data flow assortment attribute of the uplink packet even if there is no downlink packet, so that the UE can determine a sending sequence of the uplink packet according to the data flow assortment attribute, and perform differentiation processing on the uplink packet without being affected by whether there is a downlink packet.

After the UE obtains the data flow assortment attribute, in the related technologies, in a process of requesting an uplink packet resource, the UE maps a to-be-sent packet to four logical channels, and notifies an access network of statuses of the logical channels, and waits for the access network to allocate a resource to the UE. However, in this process, the UE randomly places packets of different categories in the logical channels and does not considers a difference between packet categories. Therefore, a packet of a same category may exist in multiple logical channels, which is unfavorable to effective transmission of the packet of this category. In another embodiment of the present invention, optionally, the UE may subclassify the logical channels according to the data flow assortment attribute, so that the packet of a category may be more effectively transmitted. Specifically, in addition to including step 11 to step 13, after the UE learns the data flow assortment attribute of the uplink packet according to the data flow identifier of the uplink packet in step 12, the method for processing uplink data provided in the another embodiment of the present invention may further include: performing, by the UE, redivision of the logical channels that are used to send the uplink packet; and mapping, by the UE, the uplink packet of the same category to a same logical channel.

Optionally, the performing, by the UE, redivision of the logical channels that are used to send the uplink packet may include: classifying, by the UE, a quantity of the logical channels for sending the uplink packet into a quantity same as that of the categories of the uplink packet. In this way, each category of the uplink packet is corresponding to one logical channel, which makes it more convenient to execute differentiation processing on packets of different categories.

Optionally, the mapping, by the UE, the uplink packet of the same category to a same logical channel may include: mapping, by the UE, uplink packets of different categories to different logical channels. Specifically, when the uplink packet of the same category is mapped to the same logical channel, a case in which uplink packets of multiple categories exist in one logical channel may occur. The uplink packets of different categories are mapped to different logical channels, which can ensure that the uplink packet of each category is uniquely corresponding to one logical channel.

It can be learned that, in this embodiment of the present invention, after the UE learns the data flow assortment attribute of the uplink packet according to the data flow identifier of the uplink packet in step 12, the method for processing uplink data provided in this embodiment of the present invention may further include: classifying, by the UE, the uplink logical channel according to the data flow assortment attribute sent by the network element on the network side; and mapping, by the UE, the uplink packet to a logical channel corresponding to the data flow assortment attribute of the uplink packet.

In addition, in a process of requesting resources, the related technologies do not consider different data flow assortment attributes of the packet, and therefore, in the process of requesting resources, differentiation processing cannot be performed on the packets of different categories. In another embodiment of the present invention, optionally, in the process of requesting resources, the UE may notify the network side of the data flow assortment attribute, so that the network side may execute differentiation processing according to the data flow assortment attribute. Specifically, in addition to including step 11 to step 13, after the UE learns the data flow assortment attribute of the uplink packet according to the data flow identifier of the uplink packet in step 12, the method for processing uplink data provided in the another embodiment of the present invention may further include: sending, by the UE, a resource request message to an access network, where the resource request message carries the data flow assortment attribute corresponding to the uplink logical channel.

After receiving the foregoing resource request message, the access network may perform resource allocation according to the data flow assortment attribute. Specifically, that is, a resource allocated to the UE is determined according to the data flow assortment attribute that is corresponding to the uplink logical channel and that is carried in the resource request message sent by the UE. Therefore, the resource may be first allocated or more resources may be allocated to UE that sends a high priority packet, and fewer resources or no resources are allocated to UE that sends a low priority packet.

If a priority indicated by the data flow assortment attribute that is carried in the resource request message sent by the UE is relatively low, the access network may not allocate a resource to the UE. If the priority indicated by the data flow assortment attribute that is carried in the resource request message sent by the UE is relatively high, the access network allocates a resource to the UE. When the priority indicated by the data flow assortment attribute that is carried in the resource request message sent by the UE is relatively high and the access network allocates the resource to the UE, further, after the UE sends the resource request message to the network element on the network side, the UE may receive a resource that is allocated by the access network according to the data flow assortment attribute corresponding to the uplink logical channel.

After receiving the resource allocated by the network side, the UE may transmit the uplink packet to the network side, and before that, the UE may tag the data flow assortment attribute in the uplink packet corresponding to the category indicated by the data flow assortment attribute. Specifically, the UE may identify the data flow assortment attribute in a differentiated services code point (Differentiated Services Code Point, DSCP) field of an IP packet header. After tagging the data flow assortment attribute, the UE may send, to a network element of a core network via the access network, the uplink packet that carries the data flow assortment attribute.

FIG. 2 is a flowchart of a method for processing uplink data according to an embodiment of the present invention. Referring to FIG. 2, the method for processing uplink data provided in this embodiment of the present invention includes:

21. An access network receives downlink control signaling that is from a PGW, where the downlink control signaling carries a data flow assortment attribute and a data flow identifier that are of a data flow.

The data flow assortment attribute is used to indicate a category of an uplink packet of UE.

22. The access network sends, to the UE, the downlink control signaling that carries the data flow assortment attribute and the data flow identifier, so that the UE determines a sending sequence of sending the uplink packet.

The downlink control signaling sent by the access network to the UE, for example, may be a downlink direct transfer message.

In the method for processing uplink data provided in this embodiment of the present invention, after obtaining a data flow assortment attribute of a data flow, an access network transmits, to UE, downlink control signaling that carries the data flow assortment attribute and a data flow identifier. In this way, after receiving the downlink control signaling, the UE can also learn the data flow assortment attribute even if there is no downlink packet, so that the UE can perform differentiation processing on an uplink packet as usual without being affected by whether there is a downlink packet.

Optionally, in another embodiment of the present invention, after the access network sends, to the UE, the downlink control signaling that carries the data flow assortment attribute and the data flow identifier in step 22, in addition to including steps 21-22, the method for processing uplink data provided in the another embodiment of the present invention may further include:
receiving, by the access network, a resource request message sent by the UE, where the resource request message carries the data flow assortment attribute; and
performing, by the access network, resource allocation according to the data flow assortment attribute.

Optionally, in another embodiment of the present invention, after the access network sends, to the UE, the downlink control signaling that carries the data flow assortment attribute and the data flow identifier, in addition to including steps 21-22, the method for processing uplink data provided in the another embodiment of the present invention may further include:
receiving, by the access network, an uplink packet that is from the UE and that carries the data flow assortment attribute; and
sending, by the access network to a network element of a core network, the uplink packet that carries the data flow assortment attribute.

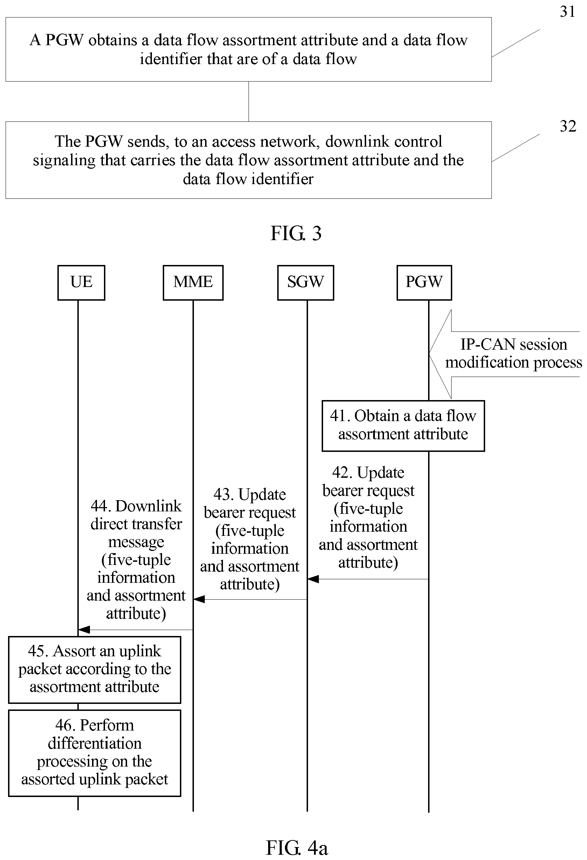

FIG. 3 is a flowchart of a method for processing uplink data according to an embodiment of the present invention. Referring to FIG. 3, the method for processing uplink data provided in this embodiment of the present invention includes:

31. A PGW obtains a data flow assortment attribute of a data flow, where the data flow assortment attribute is used to indicate a category of an uplink packet of UE.

In this embodiment of the present invention, the PGW may integrate a data flow detection function (Traffic detection function, TDF). Certainly, the PGW and the TDF may also be set separately. Based on the foregoing two cases, the PGW may obtain the data flow assortment attribute of the data flow in different manners.

Specifically, when the PGW integrates the TDF, in this step, the obtaining, by a PGW, a data flow assortment attribute of a data flow may include: receiving, by the PGW, user subscription information that is from a PCRF; detecting, by the PGW, a service type of a packet; and generating, by the PGW, the data flow assortment attribute according to the received user subscription information and the detected service type of the packet.

When the PGW and the TDF are separately set, the obtaining, by a PGW, a data flow assortment attribute of a data flow in this step may include:
receiving, by the PGW, a data flow assortment attribute of a data flow that is from a PCRF, where the data flow assortment attribute of the data flow is generated by the PCRF; or
receiving, by the PGW, a data flow assortment attribute of a data flow that is from a TDF, where the data flow assortment attribute of the data flow is generated by the TDF.

32. The PGW sends, to an access network, downlink control signaling that carries the data flow assortment attribute and the data flow identifier.

The downlink control signaling, for example, may be an update bearer request message.

In the method for processing uplink data provided in this embodiment of the present invention, after obtaining a data flow assortment attribute of a data flow, a PGW transmits, to UE via an access network, downlink control signaling that carries the data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

Optionally, in the method for processing uplink data provided in another embodiment of the present invention, in addition to including steps 31-32, after the PGW sends, to the access network, the downlink control signaling that carries the data flow assortment attribute and the data flow identifier in step 32, the method may further include:
receiving, by the PGW, an uplink packet that is sent by UE via the access network and that carries the data flow assortment attribute;
detecting, by the PGW, whether the data flow assortment attribute in the uplink packet is correct; and
if incorrect, skipping transmitting the uplink packet.

In this embodiment of the present invention, by detecting an uplink data flow assortment attribute that is from the UE, the PGW can effectively prevent a packet with an incorrect data flow assortment attribute from the UE.

To better understand the technical solutions of the present invention, the following gives a further description by using specific embodiments.

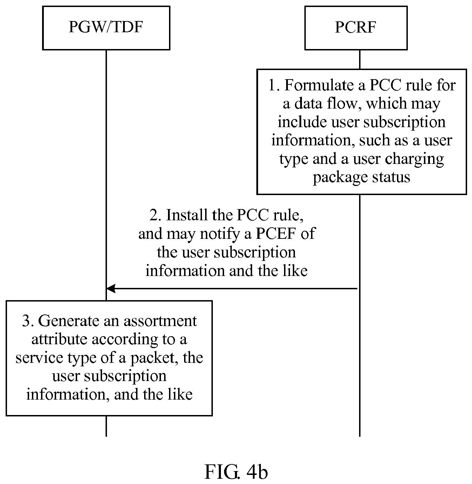

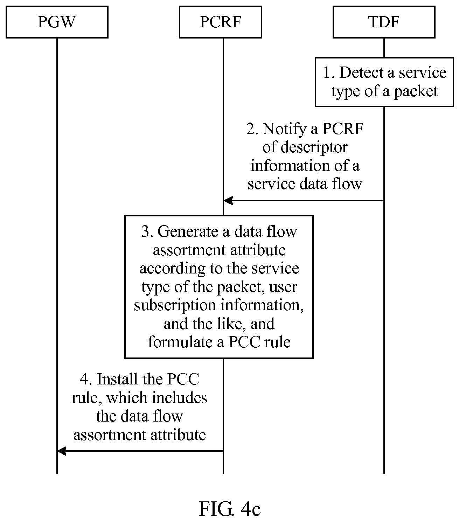

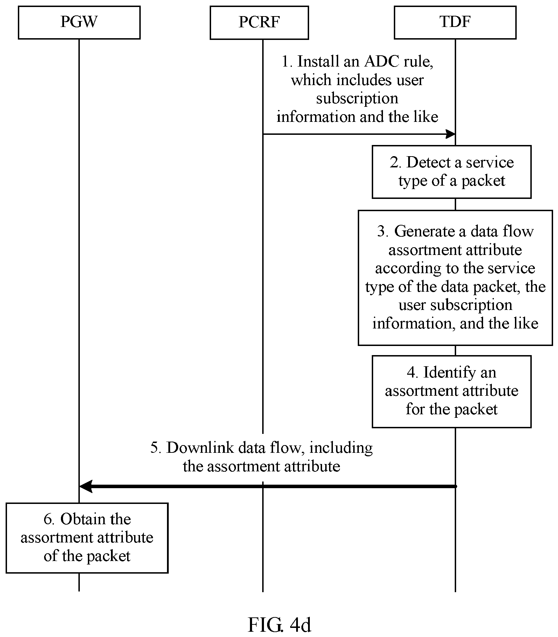

FIG. 4a is a flowchart of a method for processing uplink data according to an embodiment of the present invention. Referring to FIG. 4, a core idea of the method for processing uplink data provided in this embodiment is that, when allocating an uplink TFT for UE, a network element device on a core network side may notify the UE of each packet filter (five-tuple information) and a data flow assortment attribute of the packet filter, for example, assortment information such as priority information or a service type of each packet filter. After receiving this information, the UE may perform differentiation processing on data flows of different SDFs according to this information, such as preferentially sending packets of some types.

The following process uses a bearer modification process of unmodified quality of service (Quality of Service, QoS) that is initiated by a network side as an example for description. Specifically, the method provided in this embodiment includes the following steps.

41. A PGW obtains a data flow assortment attribute and a data flow identifier that are of a data flow.

Depending on whether the PGW integrates a TDF, the data flow assortment attribute of the data flow may be obtained in different manners for the following cases:
Case 1: Referring to FIG. 4b, when the PGW integrates the TDF (Traffic detection function, a data flow detection function):
   1. A PCRF formulates a policy and charging control (Policy and Charging Control, PCC) rule for the data flow, where the PCC rule may include user subscription information, such as a user type or a user charging package status;
   2. The PCRF installs the PCC rule to the PGW, and may notify the PGW of the user subscription information and the like; and
   3. A TDF function of the PGW detects a service type of a packet, and generates a data flow assortment attribute according to the service type of the packet, the user subscription information, and the like.
Case 2: When the PGW and the TDF are set independently of each other, the data flow assortment attribute of the data flow may be obtained in the following two manners:

### Manner 1:

Referring to FIG. 4c, this manner is specifically as follows:
1. The TDF detects the service type of the packet, and notifies the PCRF of descriptor information of a service data flow;
2. The PCRF generates the data flow assortment attribute according to the service type of the packet, the user subscription information, and the like, and formulates the PCC rule; and
3. The PCRF installs the PCC rule to the PGW, where the PCC rule includes the data flow assortment attribute of the data flow.

### Manner 2:

Referring to FIG. 4d, this manner is specifically as follows:
1. The PCRF installs an application detection and control (Application Detection and Control, ADC) rule to the TDF, where the ADC rule includes the user subscription information and the like, such as the user type and the user charging package status;
2. The TDF detects the service type of the packet;
3. The TDF generates the data flow assortment attribute according to the service type of the packet, the user subscription information, and the like; and
4. The TDF identifies the data flow assortment attribute to the packet, and sends, to the PGW, a downlink packet that carries the data flow assortment attribute.
42. The PGW sends an update bearer request message to an SGW, where the update bearer request message carries five-tuple information and the obtained data flow assortment attribute.
43. The SGW sends the update bearer request message to an MME, where the update bearer request message carries the five-tuple information and the data flow assortment attribute.
44. The MME sends a downlink direct transfer message to UE via an access network, where the downlink direct transfer message carries the five-tuple information and the data flow assortment attribute.
45. The UE receives the downlink direct transfer message that carries the data flow assortment attribute, and assorts an uplink packet according to the data flow assortment attribute.
46. The UE performs differentiation processing on the assorted uplink packet. For example, the assorted uplink packet is processed according to a priority, where the packet of a high priority is preferentially processed and the packet of a low priority is late processed or is directly discarded. The differentiation processing may further be executed according to the service type, some service types are preferentially processed according to some particular rules, and the like.

In the method for processing uplink data provided in this embodiment, a network element on a network side transmits, to UE, downlink control signaling that carries a data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

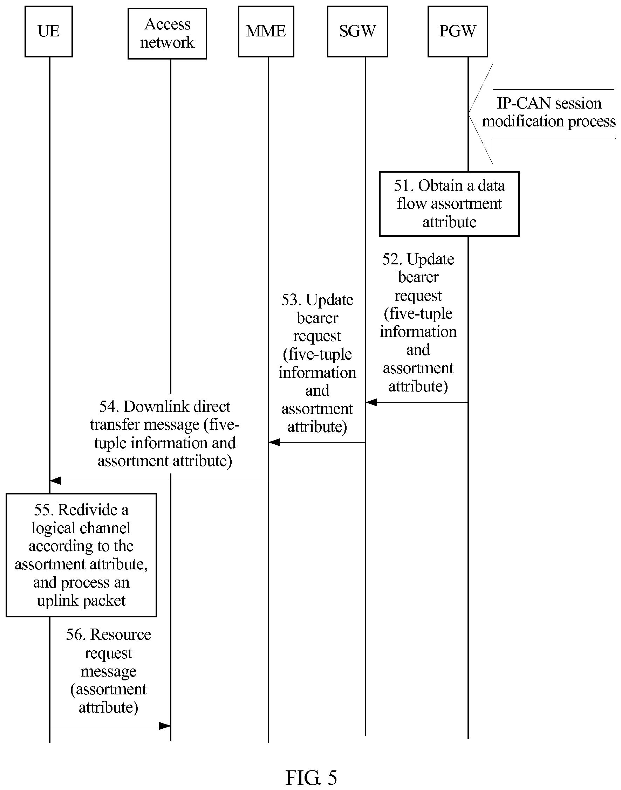

FIG. 5 is a flowchart of a method for processing uplink data according to an embodiment of the present invention. Referring to FIG. 5, the method for processing uplink data provided in this embodiment includes:
51. A PGW obtains a data flow assortment attribute and a data flow identifier that are of a data flow. For a specific manner of obtaining the data flow assortment attribute of the data flow, refer to FIG. 4b to FIG. 4d.
52. The PGW sends an update bearer request message to an SGW, where the update bearer request message carries five-tuple information and the obtained data flow assortment attribute.
53. The SGW sends the update bearer request message to an MME, where the update bearer request message carries the five-tuple information and the data flow assortment attribute.
54. The MME sends a downlink direct transfer message to UE via an access network, where the downlink direct transfer message carries the five-tuple information and the data flow assortment attribute.
55. Further, optionally, the UE receives the downlink direct transfer message that carries the data flow assortment attribute, performs redivision of a logical channel that is used to send an uplink packet, and maps the uplink packet of a same category to a same logical channel.
56. Optionally, the UE sends a resource request message to the access network, where the resource request message carries the data flow assortment attribute. If the data flow assortment attribute is classifyd according to priority information of data, for example, a representation form of the priority information is high, medium, low, and the like, after receiving this request message, the access network first allocates more resources to a terminal that sends a high priority packet.

In the method for processing uplink data provided in this embodiment, when requesting an uplink resource, UE indicates an uplink data flow assortment attribute of the UE to an access network. In this way, the access network may execute, according to the data flow assortment attribute, differentiated resource allocation on each terminal that sends an uplink packet.

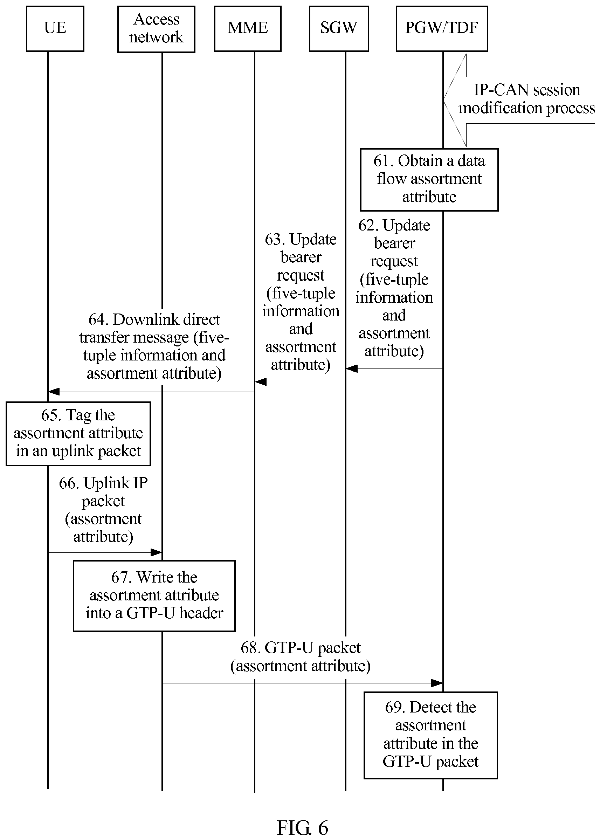

FIG. 6 is a flowchart of a method for processing uplink data according to an embodiment of the present invention. Referring to FIG. 6, the method for processing uplink data provided in this embodiment includes:
61. A PGW obtains a data flow assortment attribute and a data flow identifier that are of a data flow. For a specific manner of obtaining the data flow assortment attribute of the data flow, refer to FIG. 4b to FIG. 4d.
62. The PGW sends an update bearer request message to an SGW, where the update bearer request message carries five-tuple information and the obtained data flow assortment attribute.
63. The SGW sends the update bearer request message to an MME, where the update bearer request message carries the five-tuple information and the data flow assortment attribute.
64. The MME sends a downlink direct transfer message to UE via an access network, where the downlink direct transfer message carries the five-tuple information and the data flow assortment attribute.
65. The UE tags the data flow assortment attribute in a DSCP field of an uplink packet header corresponding to a category indicated by the data flow assortment attribute.
66. The UE sends, to the access network, an uplink packet for which the data flow assortment attribute is tagged.
67. The access network extracts a data flow assortment attribute of a packet represented by the DSCP field of the uplink packet header, and writes the data flow assortment attribute into a corresponding field in a packet header of the GPRS tunneling protocol for the user plane (GPRS Tunnelling Protocol for the user plane, GTP-U). That is, a data flow assortment attribute identifier of an original IP packet header is mapped to a field in the packet header of the GTP-U, representing the data flow assortment attribute of this data flow.
68. The access network sends the uplink GTP-U packet to a PGW or a TDF in a core network.
69. The PGW or the TDF detects whether the data flow assortment attribute in the uplink GTP-U packet is correct, and if incorrect, prevents the uplink packet.

In the method for processing uplink data provided in this embodiment, a network side may perform a check on an uplink data flow assortment attribute, so as to avoid a case in which UE incorrectly identifies the uplink data flow assortment attribute.

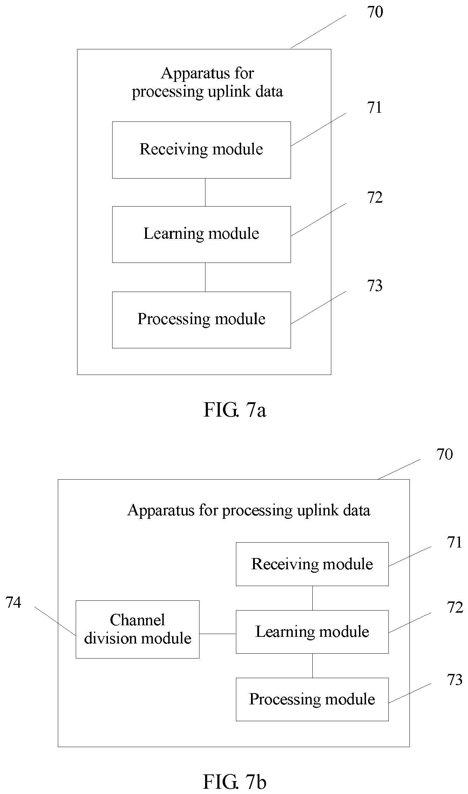

FIG. 7a is a structural block diagram of an apparatus for processing uplink data according to an embodiment of the present invention. Referring to FIG. 7a, an apparatus 70 for processing uplink data provided in this embodiment of the present invention includes: a receiving module 71, a learning module 72, and a processing module 73.

The receiving module 71 is configured to receive downlink control signaling that is sent by a network element on a network side and that carries a data flow assortment attribute and a data flow identifier, where the data flow assortment attribute is used to indicate a category of an uplink packet of UE.

The learning module 72 is configured to learn a data flow assortment attribute of the uplink packet according to a data flow identifier of the uplink packet received by the receiving module 71.

The processing module 73 is configured to determine a sending sequence of the uplink packet according to the data flow assortment attribute of the uplink packet learned by the learning module 72.

Optionally, referring to FIG. 7b, in an embodiment of the present invention, the apparatus 70 may further include a channel division module 74.

The channel division module 74 is configured to: after the learning module 72 learns the data flow assortment attribute of the uplink packet, classify an uplink logical channel according to the data flow assortment attribute sent by the network element on the network side.

The channel division module 74 may further be configured to map the uplink packet to a logical channel corresponding to the data flow assortment attribute of the uplink packet.

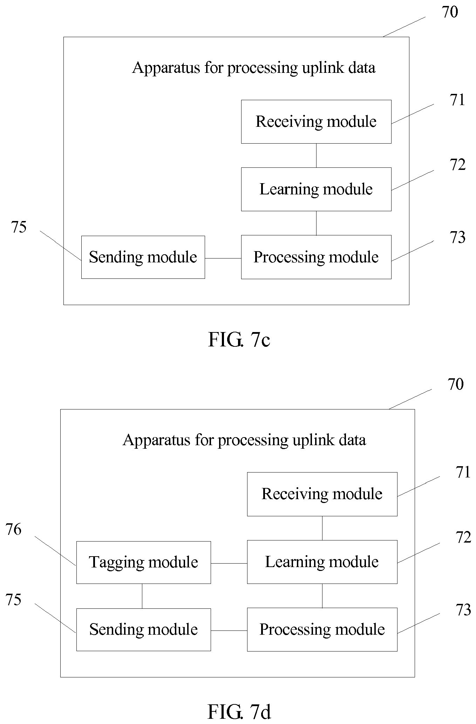

Optionally, referring to FIG. 7c, in another embodiment of the present invention, the apparatus 70 may further include a sending module 75.

The sending module 75 is configured to send a resource request message to an access network, where the resource request message carries the data flow assortment attribute corresponding to the uplink logical channel.

The receiving module 71 may further be configured to: after the sending module 75 sends the resource request message to the network element on the network side, receive a resource allocated by the access network according to the data flow assortment attribute corresponding to the uplink logical channel.

Optionally, referring to FIG. 7d, in another embodiment of the present invention, the apparatus may further include a tagging module 76 and a sending module 75.

The tagging module 76 is configured to: after the processing module 73 determines the sending sequence of the uplink packet according to the data flow assortment attribute of the uplink packet, tag the uplink data flow assortment attribute in the uplink packet.

The sending module 75 is configured to send, to a network element of a core network via the access network, the uplink packet that carries the data flow assortment attribute.

In addition, in this embodiment of the present invention, the processing module 73 may be specifically configured to:
determine a sending priority of the uplink packet according to the data flow assortment attribute of the uplink packet.

In this case, the sending module may be specifically configured to send the uplink packet according to the priority determined by the processing module 73.

In the apparatus for processing uplink data provided in this embodiment of the present invention, a network element on a network side transmits, to UE, downlink control signaling that carries a data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

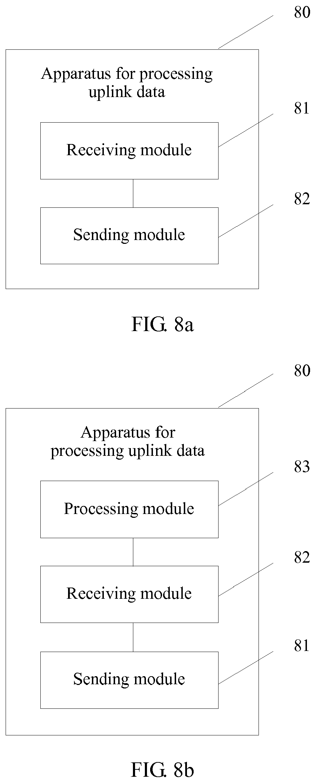

FIG. 8a is a structural block diagram of an apparatus for processing uplink data according to an embodiment of the present invention. Referring to FIG. 8a, an apparatus 80 for processing uplink data provided in this embodiment of the present invention includes: a receiving module 81 and a sending module 82.

The receiving module 81 is configured to obtain a data flow assortment attribute and a data flow identifier that are of a data flow. In this embodiment of the present invention, the receiving module 81 may be specifically configured to receive downlink control signaling that is from a packet data network gateway PGW, where the downlink control signaling carries the data flow assortment attribute and the data flow identifier that are of the data flow.

The sending module 82 is configured to send, to UE, the downlink control signaling that carries the data flow assortment attribute and the data flow identifier obtained by the receiving module 81.

Optionally, referring to FIG. 8b, in an embodiment of the present invention, the apparatus 80 may further include a processing module 83.

The receiving module 81 is further configured to: after the sending module 82 sends, to the UE, the downlink control signaling that carries the data flow assortment attribute and the data flow identifier, receive a resource request message sent by the UE, where the resource request message carries the data flow assortment attribute.

The processing module 83 is configured to perform resource allocation according to the data flow assortment attribute received by the receiving module 81.

Optionally, in another embodiment of the present invention, the receiving module 81 is configured to: after the sending module 82 sends, to the UE, the downlink control signaling that carries the data flow assortment attribute and the data flow identifier, receive an uplink packet that is from the UE and that carries the data flow assortment attribute.

The sending module 82 is further configured to send, to a network element of a core network, the uplink packet that carries the data flow assortment attribute.

In the apparatus for processing uplink data provided in this embodiment of the present invention, after a data flow assortment attribute of a data flow is obtained, downlink control signaling that carries the data flow assortment attribute and a data flow identifier is transmitted to UE. In this way, after receiving the downlink control signaling, the UE can also obtain the data flow assortment attribute even if there is no downlink packet, so that the UE can perform differentiation processing on an uplink packet as usual without being affected by whether there is a downlink packet.

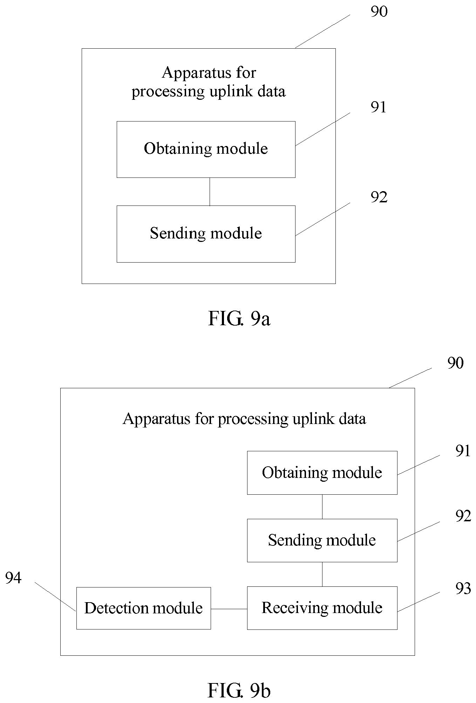

FIG. 9a is a structural block diagram of an apparatus for processing uplink data according to an embodiment of the present invention. Referring to FIG. 9a, an apparatus 90 for processing uplink data provided in this embodiment of the present invention includes: an obtaining module 91 and a sending module 92.

The obtaining module 91 is configured to obtain a data flow assortment attribute and a data flow identifier that are of a data flow. In an embodiment, the obtaining module 91 may be specifically configured to receive user subscription information that is from a policy control and charging rules functional entity PCRF; detect a service type of a packet; and generate the data flow assortment attribute according to the received user subscription information and the detected service type of the packet. In another embodiment, the obtaining module 91 may be specifically configured to receive a data flow assortment attribute of a data flow that is from a PCRF, where the data flow assortment attribute of the data flow is generated by the PCRF; or receive a data flow assortment attribute of a data flow that is from a TDF, where the data flow assortment attribute of the data flow is generated by the TDF.

The sending module 92 is configured to send, to an access network, downlink control signaling that carries the data flow assortment attribute and the data flow identifier obtained by the obtaining module.

Optionally, referring to FIG. 9b, in an embodiment of the present invention, the apparatus 90 may further include a receiving module 93 and a detection module 94.

The receiving module 93 is configured to: after the sending module 92 sends, to the access network, the downlink control signaling that carries the data flow assortment attribute and the data flow identifier, receive an uplink packet that is sent by UE via the access network and that carries the data flow assortment attribute.

The detection module 94 is configured to detect whether the data flow assortment attribute in the uplink packet received by the receiving module 93 is correct.

The sending module 92 is further configured to: if the detection module 94 detects that the data flow assortment attribute in the uplink packet is incorrect, skip transmitting the uplink packet.

In the apparatus for processing uplink data provided in this embodiment of the present invention, after a data flow assortment attribute of a data flow is obtained, downlink control signaling that carries the data flow assortment attribute and a data flow identifier is transmitted to UE via an access network. In this way, after receiving the downlink control signaling, the UE can also obtain the data flow assortment attribute even if there is no downlink packet, so that the UE can perform differentiation processing on an uplink packet as usual without being affected by whether there is a downlink packet.

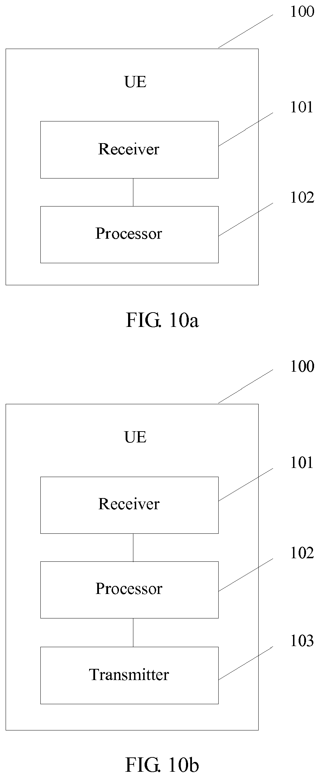

FIG. 10a is a structural block diagram of user equipment (UE) according to an embodiment of the present invention. Referring to FIG. 10a, UE 100 provided in this embodiment of the present invention includes a receiver 101 and a processor 102.

The receiver 101 is configured to receive downlink control signaling that is sent by a network element on a network side and that carries a data flow assortment attribute and a data flow identifier, where the data flow assortment attribute is used to indicate a category of an uplink packet of the UE.

The processor 102 is configured to learn a data flow assortment attribute of the uplink packet according to a data flow identifier of the uplink packet received by the receiver 101, and determine a sending sequence of the uplink packet according to the data flow assortment attribute of the uplink packet.

Optionally, in an embodiment of the present invention, the processor 102 is further configured to: after learning the data flow assortment attribute of the uplink packet, classify an uplink logical channel according to the data flow assortment attribute sent by the network element on the network side; and map the uplink packet to a logical channel corresponding to the data flow assortment attribute of the uplink packet.

Specifically, the processor 102 may be configured to: after learning the data flow assortment attribute of the uplink packet, classify a logical channel that is used to send the uplink packet; and map the uplink packet of a same category to a same logical channel.

Optionally, in an embodiment, the processor 102 may be specifically configured to classify a quantity of logical channels for sending the uplink packet into a quantity same as that of the categories of the uplink packet.

Optionally, in an embodiment, the processor may be specifically configured to map uplink packets of different categories to different logical channels.

Optionally, referring to 10b, in an embodiment, the UE may further include a transmitter 103.

The transmitter 103 is configured to send a resource request message to an access network, where the resource request message carries the data flow assortment attribute corresponding to the uplink logical channel.

Optionally, the receiver 101 is further configured to: after the transmitter 103 sends the resource request message to the network element on the network side, receive a resource allocated by the access network according to the data flow assortment attribute corresponding to the uplink logical channel.

Optionally, in an embodiment, the processor 102 is further configured to tag the data flow assortment attribute in the uplink packet.

The transmitter 103 is configured to send, to a network element of a core network via the access network, the uplink packet that carries the data flow assortment attribute.

Optionally, in an embodiment, the processor 102 may be specifically configured to:
determine a sending priority of the uplink packet according to the data flow assortment attribute of the uplink packet.

The transmitter 103 is configured to send the uplink packet according to the sending priority of the uplink packet determined by the processor 102.

In the UE provided in this embodiment of the present invention, a network element on a network side transmits, to the UE, downlink control signaling that carries a data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

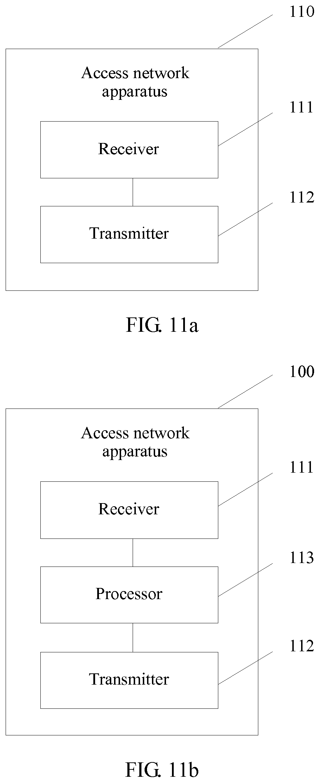

FIG. 11a is a structural block diagram of an access network apparatus according to an embodiment of the present invention. Referring to FIG. 11a, an access network apparatus 110 provided in this embodiment of the present invention includes a receiver 111 and a transmitter 112.

The receiver 111 is configured to obtain a data flow assortment attribute and a data flow identifier that are of a data flow.

The transmitter 112 is configured to send, to UE, the downlink control signaling that carries the data flow assortment attribute and the data flow identifier obtained by the receiver, so that the UE determines a sending sequence of sending an uplink packet.

Optionally, in an embodiment, the receiver 111 may be specifically configured to:
receive downlink control signaling that is from a packet data network gateway PGW, where the downlink control signaling carries the data flow assortment attribute and the data flow identifier that are of the data flow.

Optionally, referring to FIG. 11b, in an embodiment, the apparatus further includes a processor 113.

The receiver 111 is further configured to: after the transmitter 112 sends, to the UE, the downlink control signaling that carries the data flow assortment attribute and the data flow identifier, receive a resource request message sent by the UE, where the resource request message carries the data flow assortment attribute of the uplink packet.

The processor 113 is configured to perform resource allocation according to the data flow assortment attribute of the uplink packet received by the receiver 111.

Optionally, in an embodiment, the receiver 111 is further configured to: after the transmitter 112 sends, to the UE, the downlink control signaling that carries the data flow assortment attribute and the data flow identifier, receive the uplink packet that is from the UE and that carries the data flow assortment attribute.

The transmitter 112 is further configured to send, to a network element of a core network, the uplink packet that carries the data flow assortment attribute.

In the access network apparatus provided in this embodiment of the present invention, after obtaining a data flow assortment attribute of a data flow, an access network transmits, to UE, downlink control signaling that carries the data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

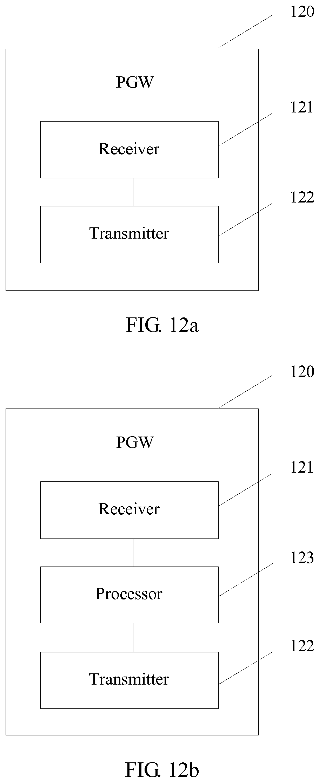

FIG. 12a is a structural block diagram of a PGW according to an embodiment of the present invention. Referring to FIG. 12a, a PGW 120 provided in this embodiment of the present invention includes a receiver 121 and a transmitter 122.

The receiver 121 is configured to obtain a data flow assortment attribute and a data flow identifier that are of a data flow.

The transmitter 122 is configured to send, to an access network, downlink control signaling that carries the data flow assortment attribute and the data flow identifier obtained by the receiver 121.

Optionally, referring to FIG. 12b, in an embodiment, the PGW 120 further includes a processor 123.

The receiver 121 is further configured to: after the transmitter 122 sends, to the access network, the downlink control signaling that carries the data flow assortment attribute and the data flow identifier, receive an uplink packet that is sent by UE via the access network and that carries the data flow assortment attribute.

The processor 123 is configured to detect whether the data flow assortment attribute in the uplink packet received by the receiver is correct.

The transmitter 122 is further configured to: if the processor 123 detects that the data flow assortment attribute in the uplink packet is incorrect, skip transmitting the uplink packet.

In this embodiment of the present invention, the receiver 121 can obtain the data flow assortment attribute of the data flow in different manners.

Optionally, in an embodiment, the receiver 121 is specifically configured to receive user subscription information that is from a policy control and charging rules functional entity PCRF; detect a service type of a packet; and generate the data flow assortment attribute according to the received user subscription information and the detected service type of the packet.

Optionally, in an embodiment, the receiver 121 is specifically configured to receive a data flow assortment attribute of a data flow that is from a PCRF, where the data flow assortment attribute of the data flow is generated by the PCRF; or receive a data flow assortment attribute of a data flow that is from a TDF, where the data flow assortment attribute of the data flow is generated by the TDF.

In the PGW provided in this embodiment of the present invention, after obtaining a data flow assortment attribute of a data flow, the PGW transmits, to UE via an access network, downlink control signaling that carries the data flow assortment attribute and a data flow identifier. In this way, after receiving the downlink control signaling, the UE can also obtain the data flow assortment attribute even if there is no downlink packet, so that the UE can perform differentiation processing on an uplink packet as usual without being affected by whether there is a downlink packet.

It should be noted that, in the foregoing apparatus embodiments for processing uplink data, the unit division is merely logical function division, but the present invention is not limited to the foregoing division, as long as corresponding functions can be implemented. In addition, specific names of the functional units are merely provided for the purpose of distinguishing the units from one another, but are not intended to limit the protection scope of the present invention.

In this specification, the embodiments are described in a progressive manner. Reference may be made to each other for a same or similar part of the embodiments. Each embodiment focuses on a difference from other embodiments. Especially, the apparatus embodiment is basically similar to the method embodiments, and therefore is briefly described. For a relevant part, reference may be made to the description in the part of the method embodiments.

It should be noted that the described apparatus embodiment is merely exemplary. The units described as separate parts may or may not be physically separate, and parts displayed as units may or may not be physical units, may be located in one position, or may be distributed on a plurality of network units. Apart or all of the modules may be selected according to actual needs to achieve the objectives of the solutions of the embodiments. In addition, in the accompanying drawings of the apparatus embodiment provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

A person of ordinary skill in the art may understand that, each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation manner of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may actually be executed substantially at the same time, or these blocks may sometimes be executed in reverse order.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing uplink data, comprising:
receiving, by user equipment UE, downlink control signaling that is sent by a network element on a network side and that carries a data flow assortment attribute and a data flow identifier;
learning, by the UE, a data flow assortment attribute of an uplink packet according to a data flow identifier of the uplink packet; and
determining, by the UE, a sending sequence of the uplink packet according to the data flow assortment attribute of the uplink packet.

2. The method according to claim 1, wherein the method further comprises:
classifying, by the UE, an uplink logical channel according to the data flow assortment attribute sent by the network element on the network side; and
mapping, by the UE, the uplink packet to a logical channel corresponding to the data flow assortment attribute of the uplink packet.

3. The method according to claim 2, wherein the method further comprises:
sending, by the UE, a resource request message to an access network, wherein the resource request message carries the data flow assortment attribute corresponding to the uplink logical channel; and
receiving, by the UE, a resource that is allocated by the access network to the UE according to the data flow assortment attribute corresponding to the uplink logical channel.

4. The method according to any one of claims 1 to 3, wherein after the determining, by the UE, a sending sequence of the uplink packet according to the data flow assortment attribute of the uplink packet, the method further comprises:
tagging, by the UE, the uplink data flow assortment attribute in the uplink packet; and
sending, by the UE to a network element of a core network via the access network, the uplink packet that carries the data flow assortment attribute.

5. The method according to claim 1, wherein the determining a sending sequence of the uplink packet according to the data flow assortment attribute of the uplink packet comprises:
determining, by the UE, a sending priority of the uplink packet according to the data flow assortment attribute of the uplink packet, and sending the uplink packet according to the priority.

6. The method according to claim 1, wherein the downlink control signaling is a downlink direct transfer message.

7. A method for processing uplink data, comprising:
receiving, by an access network, downlink control signaling that is from a packet data network gateway PGW, wherein the downlink control signaling carries a data flow assortment attribute and a data flow identifier; and
sending, by the access network to UE, the downlink control signaling that carries the data flow assortment attribute and the data flow identifier, so that the UE determines a sending sequence of an uplink packet.

8. The method according to claim 7, wherein after the sending, by the access network to UE, the downlink control signaling that carries the data flow assortment attribute and the data flow identifier, the method further comprises:
receiving, by the access network, a resource request message sent by the UE, wherein the resource request message carries a data flow assortment attribute corresponding to an uplink logical channel; and
performing, by the access network, resource allocation according to the data flow assortment attribute corresponding to the uplink logical channel.

9. The method according to claim 7, wherein after the sending, by the access network to UE, the downlink control signaling that carries the assortment attribute, the method further comprises:
receiving, by the access network, an uplink packet that is from the UE and that carries the data flow assortment attribute; and
sending, by the access network to a network element of a core network, the uplink packet that carries the data flow assortment attribute.

10. The method according to claim 7, wherein the downlink control signaling is a downlink direct transfer message.

11. A method for processing uplink data, comprising:
obtaining, by a packet data network gateway PGW, a data flow assortment attribute and a data flow identifier of a data flow; and
sending, by the PGW to an access network, downlink control signaling that carries the data flow assortment attribute and the data flow identifier.

12. The method according to claim 11, wherein after the sending, by the PGW to an access network, downlink control signaling that carries the data flow assortment attribute and the data flow identifier, the method further comprises:
receiving, by the PGW, an uplink packet that is sent by UE via the access network and that carries the data flow assortment attribute;
detecting, by the PGW, whether the data flow assortment attribute in the uplink packet is correct; and
if incorrect, skipping transmitting the uplink packet.

13. The method according to claim 11 or 12, wherein the obtaining, by a PGW, a data flow assortment attribute of a data flow comprises:
receiving, by the PGW, user subscription information that is from a policy control and charging rules functional entity PCRF;
detecting, by the PGW, a service type of a packet; and
generating, by the PGW, the data flow assortment attribute according to the received user subscription information and the detected service type of the packet.

14. The method according to claim 11, wherein the obtaining, by a PGW, a data flow assortment attribute of a data flow comprises:
receiving, by the PGW, a data flow assortment attribute of a data flow that is from a PCRF, wherein the data flow assortment attribute of the data flow is generated by the PCRF; or
receiving, by the PGW, a data flow assortment attribute of a data flow that is from a TDF, wherein the data flow assortment attribute of the data flow is generated by the TDF.

15. The method according to claim 11, wherein the downlink control signaling is an update bearer request message.

16. An apparatus for processing uplink data, comprising:
a receiving module, configured to receive downlink control signaling that is sent by a network element on a network side and that carries a data flow assortment attribute and a data flow identifier;
a learning module, configured to learn a data flow assortment attribute of an uplink packet according to a data flow identifier of the uplink packet; and
a processing module, configured to determine a sending sequence of the uplink packet according to the data flow assortment attribute of the uplink packet learned by the learning module.

17. The apparatus according to claim 16, wherein the apparatus further comprises:
a channel division module, configured to: after the learning module learns the data flow assortment attribute of the uplink packet, classify an uplink logical channel according to the data flow assortment attribute sent by the network element on the network side; wherein
the channel division module is further configured to map the uplink packet to a logical channel corresponding to the data flow assortment attribute of the uplink packet.

18. The apparatus according to claim 17, wherein the apparatus further comprises:
a sending module, configured to send a resource request message to an access network, wherein the resource request message carries the data flow assortment attribute corresponding to the uplink logical channel; wherein
the receiving module is further configured to receive a resource that is allocated by the access network to the uplink logical channel according to the data flow assortment attribute corresponding to the uplink logical channel.

19. The apparatus according to any one of claims 16 to 18, wherein the apparatus further comprises:
a tagging module, configured to: after the processing module determines the sending sequence of the uplink packet according to the data flow assortment attribute of the uplink packet, tag the uplink data flow assortment attribute in the uplink packet; and
a sending module, configured to send, to a network element of a core network via the access network, the uplink packet that carries the data flow assortment attribute.

20. The apparatus according to claim 16, wherein the processing module is specifically configured to:
determine a sending priority of the uplink packet according to the data flow assortment attribute of the uplink packet; and
the sending module is specifically configured to send the uplink packet according to the priority determined by the processing module.

21. An apparatus for processing uplink data, comprising:
a receiving module, configured to receive downlink control signaling that is from a packet data network gateway PGW, wherein the downlink control signaling carries a data flow assortment attribute and a data flow identifier; and
a sending module, configured to send, to UE, the downlink control signaling that carries the data flow assortment attribute and the data flow identifier obtained by the obtaining module, so that the UE determines a sending sequence of an uplink packet.

22. The apparatus according to claim 21, wherein
the receiving module is further configured to: after the sending module sends, to the UE, the downlink control signaling that carries the data flow assortment attribute and the data flow identifier, receive a resource request message sent by the UE, wherein the resource request message carries a data flow assortment attribute corresponding to an uplink logical channel; and
the apparatus further comprises:
a processing module, configured to perform resource allocation according to the data flow assortment attribute that is received by the receiving module and that is corresponding to the uplink logical channel.

23. The apparatus according to claim 21, wherein
the receiving module is further configured to: after the sending module sends, to the UE, the downlink control signaling that carries the data flow assortment attribute and the data flow identifier, receive an uplink packet that is from the UE and that carries the data flow assortment attribute; and
the sending module is further configured to send, to a network element of a core network, the uplink packet that carries the data flow assortment attribute.

24. An apparatus for processing uplink data, comprising:
an obtaining module, configured to obtain a data flow assortment attribute and a data flow identifier that are of a data flow; and
a sending module, configured to send, to an access network, downlink control signaling that carries the data flow assortment attribute and the data flow identifier obtained by the obtaining module.

25. The apparatus according to claim 24, wherein the apparatus further comprises:
a receiving module, configured to: after the sending module sends, to the access network, the downlink control signaling that carries the data flow assortment attribute and the data flow identifier, receive an uplink packet that is sent by UE via the access network and that carries the data flow assortment attribute; and
a detection module, configured to detect whether the data flow assortment attribute in the uplink packet received by the receiving module is correct; wherein
the sending module is further configured to: if the detection module detects that the data flow assortment attribute in the uplink packet is incorrect, skip transmitting the uplink packet.

26. The method according to claim 24 or 25, wherein the obtaining module is specifically configured to:
receive user subscription information that is from a policy control and charging rules functional entity PCRF;
detect a service type of a packet; and
generate the data flow assortment attribute according to the received user subscription information and the detected service type of the packet.

27. The method according to claim 24, wherein the obtaining module is specifically configured to:
receive a data flow assortment attribute of a data flow that is from a PCRF, wherein the data flow assortment attribute of the data flow is generated by the PCRF; or
receive a data flow assortment attribute of a data flow that is from a TDF, wherein the data flow assortment attribute of the data flow is generated by the TDF.

28. User equipment UE, comprising a receiver and a processor, wherein
the receiver is configured to receive downlink control signaling that is sent by a network element on a network side and that carries a data flow assortment attribute and a data flow identifier; and
the processor is configured to learn a data flow assortment attribute of an uplink packet according to a data flow identifier of the uplink packet received by the receiver, and determine a sending sequence of the uplink packet according to the data flow assortment attribute of the uplink packet.

29. The UE according to claim 28, wherein
the processor is further configured to: after learning the data flow assortment attribute of the uplink packet, classify an uplink logical channel according to the data flow assortment attribute sent by the network element on the network side; and map the uplink packet to a logical channel corresponding to the data flow assortment attribute of the uplink packet.

30. The UE according to claim 29, wherein the UE further comprises:
a transmitter, configured to send a resource request message to an access network, wherein the resource request message carries the data flow assortment attribute corresponding to the uplink logical channel; wherein
the receiver is further configured to receive a resource that is allocated by the access network to the uplink logical channel according to the data flow assortment attribute corresponding to the uplink logical channel.

31. The UE according to any one of claims 28 to 29, wherein
the processor is further configured to: after determining the sending sequence of the uplink packet according to the data flow assortment attribute of the uplink packet, tag the uplink data flow assortment attribute in the uplink packet; and
the UE further comprises a transmitter, configured to send, to a network element of a core network via the access network, the uplink packet that carries the data flow assortment attribute.

32. The UE according to claim 28, wherein the processor is specifically configured to:
determine a sending priority of the uplink packet according to the data flow assortment attribute of the uplink packet; and
the UE further comprises:
a transmitter, configured to send the uplink packet according to the sending priority of the uplink packet determined by the processor.

33. An access network apparatus, comprising a receiver and a transmitter, wherein
the receiver is configured to receive downlink control signaling that is from a packet data network gateway PGW, wherein the downlink control signaling carries a data flow assortment attribute and a data flow identifier that are of a data flow; and
the transmitter is configured to send, to UE, the downlink control signaling that carries the data flow assortment attribute and the data flow identifier obtained by the receiver, so that the UE determines a sending sequence of sending an uplink packet.

34. The apparatus according to claim 33, wherein
the receiver is further configured to: after the transmitter sends, to the UE, the downlink control signaling that carries the data flow assortment attribute and the data flow identifier, receive a resource request message sent by the UE, wherein the resource request message carries the data flow assortment attribute; and
the apparatus further comprises:
a processor, configured to perform resource allocation according to the data flow assortment attribute received by the receiver.

35. The apparatus according to claim 33, wherein
the receiver is further configured to: after the transmitter sends, to the UE, the downlink control signaling that carries the data flow assortment attribute and the data flow identifier, receive an uplink packet that is from the UE and that carries the data flow assortment attribute; and
the transmitter is further configured to send, to a network element of a core network, the uplink packet that carries the data flow assortment attribute.

36. A packet data network gateway, comprising a receiver and a transmitter, wherein
the receiver is configured to obtain a data flow assortment attribute and a data flow identifier that are of a data flow; and
the transmitter is configured to send, to an access network, downlink control signaling that carries the data flow assortment attribute and the data flow identifier obtained by the receiver.

37. The gateway according to claim 36, wherein
the receiver is further configured to: after the transmitter sends, to the access network, the downlink control signaling that carries the data flow assortment attribute and the data flow identifier, receive an uplink packet that is sent by UE via the access network and that carries the data flow assortment attribute; and
the apparatus further comprises:
a processor, configured to detect whether the data flow assortment attribute in the uplink packet received by the receiver is correct; and
the transmitter is further configured to: if the processor detects that the data flow assortment attribute in the uplink packet is incorrect, skip transmitting the uplink packet.

38. The gateway according to claim 36 or 37, wherein the receiver is specifically configured to:
receive user subscription information that is from a policy control and charging rules functional entity PCRF;
detect a service type of a packet; and
generate the data flow assortment attribute according to the received user subscription information and the detected service type of the packet.

39. The gateway according to claim 36, wherein the receiver is specifically configured to:
receive a data flow assortment attribute of a data flow that is from a PCRF, wherein the data flow assortment attribute of the data flow is generated by the PCRF; or
receive a data flow assortment attribute of a data flow that is from a TDF, wherein the data flow assortment attribute of the data flow is generated by the TDF.
